# EUROPÄISCHE PATENTSCHRIFT

(11) **EP 0 625 657 B1**
(45) Veröffentlichungstag und Bekanntmachung des Hinweises auf die Patenterteilung: **10.06.1998**
(21) Anmeldenummer: 94105736.6
(22) Anmeldetag: 14.04.1994
(51) Int. Cl.: F16J 3/06

(54) **Topf- oder Rollmembran sowie Verfahren zu ihrer Herstellung**
Rolling membrane and process for manufacturing the same
Diaphragme à déroulement et procédé de fabrication

(30) Priorität: 17.04.1993 DE 4312538
(43) Veröffentlichungstag der Anmeldung: 23.11.1994
(73) Patentinhaber: Continental Aktiengesellschaft, 30165 Hannover (DE)
(72) Erfinder: Stöter, Bernd, D-30880 Laatzen (DE)

(56) Entgegenhaltungen:
- CH-A- 358 294
- DE-A- 1 126 746
- DE-A- 1 960 281
- DE-A- 3 320 574
- DE-A- 3 741 897

## Beschreibung

Die Erfindung betrifft Verfahren zur Herstellung einer Topf- oder Rollmembran aus Gummi oder gummiähnlichen Kunststoffen und einer textilen Verstärkungseinlage gemäß dem Oberbegriff des Patentanspruchs 1 sowie nach diesen Verfahren hergestellte Topf- oder Rollmembranen.

Derartige Membranen und ihre Herstellung sind beispielsweise in der DE-PS 28 01 697 beschrieben. Die bekannten Membrankörper wurden aus einem beidseitig vollflächig beschichteten Gewebe hergestellt, also aus einem dreischichtig aufgebauten Flächengebilde, das aus einer inneren sowie aus einer äußeren Elastomerschicht und einer dazwischen eingebetteten Gewebelage bestand, und bei der dreidimensionalen Formung dieser Membranen wurden in die anschließend deren Innenseite bildende Beschichtung konzentrische Ringnuten eingeformt.

Ferner sind aus der DE-AS 11 92 892 Rollmembranen und ihre Herstellung bekannt, die aus einer Gewebelage und einer flüssigkeits- bzw. gasdichten Schicht bestehen, wobei diese Schicht das Gewebe durchdringt.

Der Erfindung liegt die Aufgabe zugrunde, die eingangs beschriebenen Topf- oder Rollmembranen bezüglich ihrer Herstellung zu vereinfachen und hinsichtlich ihrer Funktion zu verbessern.

Ausgehend von den genannten Verfahren zur Herstellung von Topf- oder Rollmembranen wird diese Aufgabe erfindungsgemäß durch ein Verfahren gelöst, das die im kennzeichnenden Teil des Patentanspruchs 1 angegebenen Merkmale aufweist. Der übliche dreischichtige Aufbau des beschichteten Gewebes, von dem die Herstellung der Membran bisher ausging, wird also durch Weglassen der inneren Elastomerschicht auf einen zweischichtigen Aufbau verringert. Durch die nur noch einseitige Beschichtung des Gewebes werden die erfindungsgemäße Topf- oder Rollmembran und ihre Herstellung insgesamt verbessert; denn durch die Einsparung der inneren Elastomerschicht lassen sich das Gewicht des Membrankörpers sowie die Material- und Maschinenkosten seiner Herstellung senken, und durch die sich ergebende höhere Flexibilität seiner Wandung wird seine bestimmungsgemäße Funktion verbessert.

Die Bildung der Ringrippen, entsprechend ringförmig angeordneten Noppen oder ähnlichen Erhebungen erfolgt erfindungsgemäß dadurch, daß bei der Formung des Membrankörpers aus der einseitigen Beschichtung des Gewebes Anteile durch das Gewebe hindurchgedrückt und auf der unbeschichteten Gewebeseite entsprechend erhaben geformt werden.

In Ausgestaltung dieser erfindungsgemäßen Verfahrensweise wird die Membraninnenfläche zusätzlich zu den Ringrippen o.ä. mit einem dünnen elastomeren Überzug versehen, dessen Material ebenfalls aus der gegenseitigen Beschichtung der Gewebelage stammt.

In der Zeichnung ist ein Ausführungsbeispiel der Erfindung vereinfacht dargestellt. Es zeigen:
- Figur 1 -: einen Längsschnitt durch eine erfindungsgemäß hergestellte Topf- oder Rollmembran und
- Figur 2 -: das Detail B aus Figur 1 in vergrößertem Maßstab

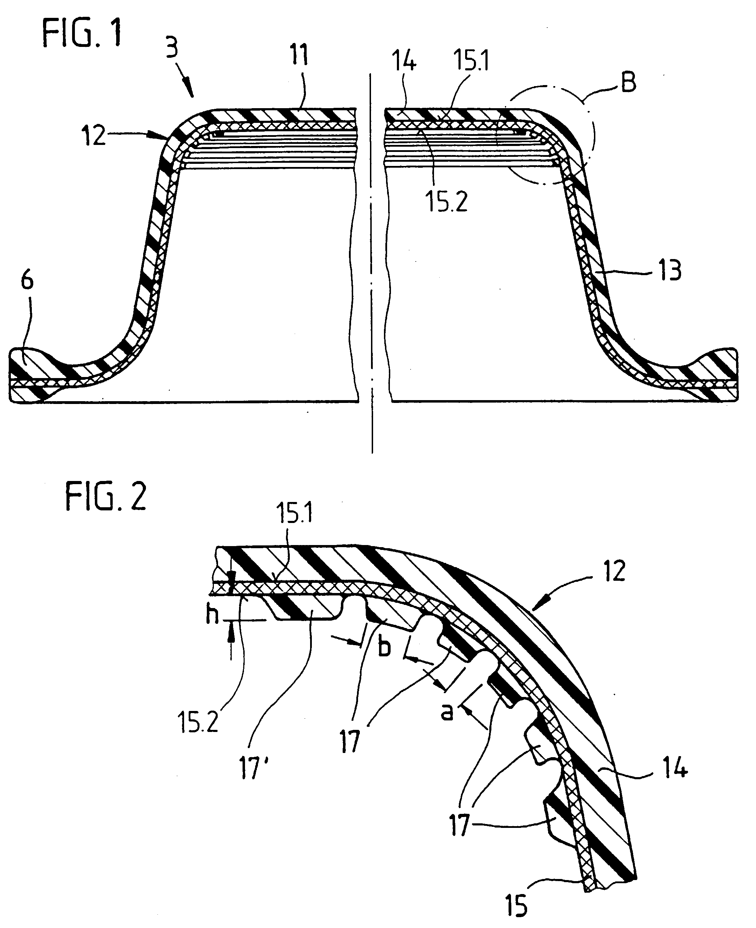

Die in Figur 1 dargestellte erfindungsgemäße Topf- oder Rollmembran 3 weist einen im wesentlichen flachebenen Boden 11 auf, der über einen Bodenradius 12 in eine biegsame Wandung 13 übergeht, die mit einem in einen Membranzylinder einspannbaren verdickten Außenrand 6 versehen ist.

Auf die Gewebelage 15 sind mehrere konzentrische Ringrippen 17, 17' aufvulkanisiert, wobei das elastomere Material, aus dem diese Ringrippen bestehen, aus der ursprünglich nur auf die Gegenseite der Gewebelage 15 - also die in Gebrauchslage der Membran dem Druckraum des Bremszylinders zugewandte Außenseite 15.1 - aufgebrachten Elastomerschicht 14 stammt und bei der dreidimensionalen Formung des Membrankörpers durch die Gewebelage 15 hindurchgepreßt und dann in der entsprechend ausgebildeten Heizpreßform auf die ursprünglich unbeschichtete Seite der Gewebelage 15 - also die in Gebrauchslage der Membran dem starren Kolbenteller des Bremszylinders zugewandte Innenseite 15.2 - aufvulkanisiert worden ist.

Wie die in Fig. 2 wiedergegebene vergrößerte Darstellung des Details B aus Fig. 1 zeigt, ist es zweckmäßig, eine Ringrippe 17' im radial äußersten Bereich des flachebenen Bodens 11 des Membrankörpers 3 anzuordnen, während die übrigen Ringrippen 17 auf dem Übergangsbereich zwischen Boden 11 und Wandung 13, also im Bereich des Bodenradius 12 des Membrankörpers 3, liegen. Vorzugsweise beträgt der lichte Abstand a zwischen zwei Ringrippen 17 etwa 1 mm, die Rippenbreite b etwa 1 bis 2 mm und die Rippenhöhe h etwa 1 mm. Dabei ist es zweckmäßig, wenn die erste auf dem Boden 11 des Membrankörpers angeordnete Ringrippe 17' breiter ausgebildet ist als die übrigen Ringrippen 17. In der dargestellten Ausführungsform, die sich in der Praxis bewährt hat, sind insgesamt sechs Ringrippen 17, 17' vorgesehen.

Bei allen Ausführungsformen liegt dem Membrankörper 3 der oben beschriebene zweischichtige Aufbau zugrunde. Infolge der nur noch einseitigen Beschichtung der Gewebelage 15 ergeben sich erhebliche Kosteneinsparungen durch eine verfahrenstechnisch einfachere Herstellung und einen geringeren Elastomerverbrauch. Ferner ermöglicht der zweischichtige Aufbau eine Verbesserung der Gebrauchseigenschaften und eine Verlängerung der Lebensdauer der Membranen, insbesondere durch die damit erhöhte Flexibilität der Membranflanken.

## Patentansprüche

1. Verfahren zur Herstellung einer Topf- oder Rollmembran für Kraftfahrzeugbremszylinder, die aus einer mit einer Elastomerschicht (14) beschichteten Gewebelage (15) gebildet ist, einen im wesentlichen flachebenen Boden (11) aufweist und unter Einstülpbewegungen ihrer biegsamen Wandungen in Axialrichtung gegen ihren im Bremszylinder einspannbaren Außenrand (6) verstellbar ist und an ihrer in Gebrauchslage an einem starren Kolbenteller abstützbaren Innenseite (15.2) eine Auflage aus konzentrischen Ringrippen, entsprechend ringförmig angeordneten Noppen oder ähnlichen Erhebungen (17, 17') aufweist,
**dadurch gekennzeichnet**
daß der Membrankörper (3) aus einer einseitig nur an ihrer in Gebrauchslage dem Kolbenteller abgewandten Außenseite (15.1) mit einer Elastomerschicht (14) beschichteten Gewebelage (15) geformt wird, wobei Anteile der Elastomerschicht (14) durch die Gewebelage (15) hindurchgedrückt und auf der Innenseite (15.2) in Form der konzentrischen Ringrippen, entsprechend ringförmig angeordneten Noppen oder ähnlichen Erhebungen (17, 17') auf die Gewebelage (15) aufvulkanisiert werden.

2. Verfahren nach Anspruch 1, dadurch gekennzeichnet, daß bei der Formung des Membrankörpers (3) Anteile der Elastomerschicht (14) durch die Gewebelage (15) hindurchgedrückt und auf der Innenseite (15.2) als dünner elastomerer Überzug auf die Gewebelage (15) aufvulkanisiert werden.

3. Topf- oder Rollmembran für Kraftfahrzeugbremszylinder, die aus einer mit einer Elastomerschicht (14) beschichteten Gewebelage (15) gebildet ist, einen im wesentlichen flachebenen Boden (11) aufweist und unter Einstülpbewegungen ihrer biegsamen Wandungen in Axialrichtung gegen ihren im Bremszylinder einspannbaren Außenrand verstellbar ist und an ihrer in Gebrauchslage an einem starren Kolbenteller abstützbaren Innenseite (15.2) eine elastomere Auflage aus konzentrischen Ringrippen, entsprechend ringförmig angeordneten Noppen oder ähnlichen Erhebungen (17, 17') aufweist,
dadurch gekennzeichnet,
daß sie aus einer, nur an der die Außenseite (15.1) der Topf- oder Rollmembran bildenden Seite eine Beschichtung aus einem Elastomer aufweisenden und an der die Innenseite (15.2) der Topf- oder Rollmembran bildenden Seite unbeschichteten Gewebelage (15) geformt ist derart, daß die Erhebungen und gegebenenfalls ein dünner elastomerer Überzug auf der Innenseite (15.2) aus bei der Formung der Topf- oder Rollmembran durch die Gewebelage (15) hindurchgedrückten Anteilen der Elastomerschicht (14) gebildet sind.

4. Topf- oder Rollmembran nach Anspruch 3, dadurch gekennzeichnet, daß die Breite (b) der Ringrippen (17) 1 - 2 mm beträgt.

5. Topf- oder Rollmembran nach einem der Ansprüche 3 bis 4, dadurch gekennzeichnet, daß der lichte Abstand (a) zwischen zwei Ringrippen (17) etwa 1 mm beträgt.

6. Topf- oder Rollmembran nach einem der Ansprüche 3 bis 5, dadurch gekennzeichnet, daß die Höhe (h) der Ringrippen (17) etwa 1 mm beträgt.

## Claims

1. Method of producing a cup-shaped or roll-shaped diaphragm for automotive vehicle brake cylinders, which diaphragm is formed from a fabric ply (15) coated with an elastomer layer (14) and has a substantially flat base (11), said diaphragm being displaceable in the axial direction towards its outer edge (6), which can be clamped in position in the brake cylinder, by inward and outward movements of its flexible walls and having a support layer of concentric annular ribs, correspondingly annularly disposed knubs or similar raised portions (17, 17') on its internal surface (15.2), which is supportable in the position of use on a rigid piston plate, characterised in that the diaphragm body (3) is formed from a fabric ply (15), which is unilaterally coated with an elastomer layer (14) only on its external surface (15.1) facing away from the piston plate in the position of use, portions of the elastomer layer (14) being pushed through the fabric ply (15) and being vulcanised onto the fabric ply (15) on the internal surface (15.2) in the form of concentric annular ribs, correspondingly annularly disposed knubs or similar raised portions (17, 17').

2. Method according to claim 1, characterised in that, during the formation of the diaphragm body (3), portions of the elastomer layer (14) are pushed through the fabric ply (15) and vulcanised onto the fabric ply (15) on the internal surface (15.2) as a thin elastomeric covering.

3. Cup-shaped or roll-shaped diaphragm for automotive vehicle brake cylinders, which diaphragm is formed from a fabric ply (15) coated with an elastomer layer (14) and has a substantially flat base (11), said diaphragm being displaceable in the axial direction towards its outer edge, which can be clamped in position in the brake cylinder, by inward and outward movements of its flexible walls and having a support elastomer layer of concentric annular ribs, correspondingly annularly disposed knubs or similar raised portions (17, 17') on its internal surface (15.2), which is supportable in the position of use on a rigid piston plate, characterised in that it is formed from a fabric ply (15), which has a cuating formed from an elastomer only on the side forming the external surface (15.1) of the cup-shaped or roll-shaped diaphragm, and is uncoated on the side forming the internal surface (15.2) of the cup-shaped or roll-shaped diaphragm, so that the raised portions and possibly a thin elastomeric covering are formed on the internal surface (15.2) from portions of the elastomer layer (14) which are pushed through the fabric ply (15) during the formation of the cup-shaped or roll-shaped diaphragm.

4. Cup-shaped or roll-shaped diaphragm according to claim 3, characterised in that the width (b) of the annular ribs (17) is 1 - 2 mm.

5. Cup-shaped or roll-shaped diaphragm according to one of claims 3 to 4, characterised in that the internal spacing (a) between two annular ribs (17) is substantially 1 mm.

6. Cup-shaped or roll-shaped diaphragm according to one of claims 3 to 5, characterised in that the height (h) of the annular ribs (17) is substantially 1 mm.

## Revendications

1. Procédé de fabrication d'un diaphragme boisseau ou à déroulement pour cylindre de frein de véhicule à moteur, qui est formé d'une couche de tissu ( 15) revêtue d'une couche élastomère ( 14), présente un fond ( 11) sensiblement plan et peut se déplacer selon la direction axiale, en direction de son bord extérieur (6) qui peut se brider dans le cylindre de frein, en opérant des mouvements de retroussement de ses parois flexibles et présente, sur sa face intérieure (15.2), qui, en position de service, peut s'appuyer contre un plateau de piston rigide, une garniture appliquée constituée de nervures annulaires concentriques, de bossages disposés annulairement de façon appropriée ou d'éminences semblables (17, 17'),
caractérisé par le fait
que le diaphragme (3) est formé d'une couche de tissu (15) qui n'est revêtue d'une couche élastomère (14) que sur une seule face, sur sa face extérieure ( 15.1) orientée, en position de service, du côté opposé au plateau de piston, des parties de la couche élastomère (14) étant pressées à travers la couche de tissu (15) et vulcanisées sur la couche de tissu (15), sur la face intérieure (15.9), sous forme de nervures annulaires concentriques, de bossages disposés annulairement de façon appropriée ou d'éminences semblables (17, 17').

2. Procédé selon la revendication 1, caractérisé par le fait que lors de la mise en forme du diaphragme (3), des parties de la couche élastomère ( 14) sont pressées à travers la couche de tissu ( 15) et vulcanisées sur la couche de tissu (15), sur la face intérieure (15.9), sous forme d'un mince revêtement élastomère.

3. Diaphragme boisseau ou à déroulement pour cylindre de frein de véhicule à moteur, qui est formé d'une couche de tissu (15) revêtue d'une couche élastomère (14), présente un fond (11) sensiblement plan et peut se déplacer selon la direction axiale, en direction de son bord extérieur qui peut se brider dans le cylindre de frein, en opérant des mouvements de retroussement de ses parois flexibles et présente, sur sa face intérieure (15.2), qui, en position de service, peut s'appuyer contre un plateau de piston rigide, une garniture élastomère appliquée constituée de nervures annulaires concentriques, de bossages disposés annulairement de façon appropriée ou d'éminences semblables (17, 17'),
caractérisé par le fait
qu'il est formé d'une couche de tissu (15) ne présentant un revêtement d'élastomère que sur la f'ace formant la face extérieure (15.1) du diaphragme boisseau ou à déroulement et non revêtue sur la face formant la face intérieure (15.2) du diaphragme boisseau ou à déroulement, que les éminences et éventuellement un fin revêtement élastomère sont formés sur la face intérieure (15.2) à partir de parties de la couche élastomère (14) pressées à travers la couche de tissu (15) lors de la mise en forme du diaphragme boisseau ou à déroulement.

4. Diaphragme boisseau ou à déroulement selon la revendication 3, caractérisé par le fait que la largeur (b) des nervures annulaires (7) vaut 1 - 2 mm.

5. Diaphragme boisseau ou à déroulement selon l'une des revendications 3 à 4, caractérisé par le fait que la distance libre (a) entre deux nervures annulaires (17) vaut environ 1 mm.

6. Diaphragme boisseau ou à déroulement selon l'une des revendications 3 à 5, caractérisé par le fait que la hauteur (h) des nervures annulaires (17) vaut environ 1 mm.
